(19) Europäisches Patentamt
European Patent Office
Office européen des brevets

(11) **EP 3 995 927 B1**

(12) **FASCICULE DE BREVET EUROPEEN**

(45) Date de publication et mention
de la délivrance du brevet:
**19.04.2023 Bulletin 2023/16**

(21) Numéro de dépôt: **21204899.5**

(22) Date de dépôt: **27.10.2021**

(51) Classification Internationale des Brevets (IPC):
***G05D 1/06*** *(2006.01)*

(52) Classification Coopérative des Brevets (CPC):
**G05D 1/0676**

(54) **SYSTÈME ET PROCÉDÉ D'AIDE À L'ATTERRISSAGE D'UN AÉRONEF**

LANDUNGSHILFSSYSTEM UND -VERFAHREN FÜR EIN LUFTFAHRZEUG

SYSTEM AND METHOD FOR ASSISTING IN THE LANDING OF AN AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.11.2020 FR 2011365**

(43) Date de publication de la demande:
**11.05.2022 Bulletin 2022/19**

(73) Titulaire: **AIRBUS OPERATIONS (S.A.S.)**
**31060 Toulouse (FR)**

(72) Inventeur: **MARCONNET, Nicolas**
**31060 TOULOUSE (FR)**

(74) Mandataire: **Jardel, Marc Henry Philippe**
**Airbus Operations S.A.S.**
**ETRT**
**316, route de Bayonne**
**31060 Toulouse Cedex 09 (FR)**

(56) Documents cités:
**EP-A2- 2 947 534     FR-A1- 3 016 222**
**US-B1- 7 546 183**

**Description**

L'invention est relative au domaine des systèmes de navigation et de contrôle d'un aéronef utilisés lors d'une approche d'une piste d'atterrissage par l'aéronef. Une ou plusieurs approches prédéterminées sont généralement publiées pour chaque piste d'atterrissage d'un aéroport. Pour une approche prédéterminée d'un aéroport, les informations publiées comprennent généralement au moins : une orientation de la piste d'atterrissage, une pente et une orientation d'un axe d'approche de la piste d'atterrissage et une hauteur de décision en dessous de laquelle la piste d'atterrissage doit être visible par un pilote de l'aéronef pour pouvoir atterrir sur la piste d'atterrissage. De nombreuses pistes d'atterrissage sont équipées de balises émettrices d'un système d'atterrissage aux instruments dit ILS (pour « Instruments Landing System » en anglais). Ces balises correspondent généralement à une balise émettant un signal de guidage latéral, appelé « Loc », et une balise émettant un signal de guidage vertical, appelé « Glide ». Les signaux émis par ces balises permettent à un aéronef équipé de récepteurs de signaux ILS de suivre un axe d'approche de la piste d'atterrissage correspondant sensiblement à l'axe d'approche publié pour cette piste d'atterrissage. Il existe plusieurs catégories d'approches aux instruments, selon notamment la précision des balises ILS équipant la piste d'atterrissage, le profil du terrain en amont de la piste d'atterrissage et la précision des récepteurs de signaux ILS embarqués à bord de l'aéronef. La catégorie la plus fréquente est la catégorie 1 (cat I) pour laquelle la hauteur de décision est généralement de 200ft (environ 60 mètres), avec une visibilité requise de la piste d'atterrissage d'au moins 550m. Pour la catégorie 2 (cat II), la hauteur de décision est de 100ft (environ 30m), avec une visibilité requise de la piste d'atterrissage d'au moins 300m. Pour la catégorie 3A (cat IIIA), la hauteur de décision est de 50ft (environ 15m), avec une visibilité requise de la piste d'atterrissage d'au moins 175m. Pour la catégorie 3B (cat IIIB), la hauteur de décision est nulle, avec une visibilité requise de la piste d'atterrissage d'au moins 50m. Pour la catégorie 3C (cat IIIC), aucune visibilité de la piste d'atterrissage n'est requise. Par conséquent, une approche cat IIIC permet de faire des atterrissages de façon totalement automatique, sans aucune visibilité de la piste d'atterrissage. Toutefois, très peu de pistes d'atterrissage sont équipées de balises ILS permettant des approches cat IIIC, du fait d'une part des exigences élevées de précision de telles balises, d'exigences relatives au terrain en amont du seuil de piste (faible dénivelé...) ainsi que d'exigences relatives à l'éclairage de la piste d'atterrissage. Afin de limiter la charge de travail d'un pilote d'un aéronef pendant les phases d'atterrissage, il serait souhaitable que l'aéronef puisse atterrir de façon entièrement automatique, avec ou sans visibilité de la piste par le pilote, même sur des pistes d'atterrissage qui ne sont pas prévues pour des approches cat IIIC, par exemple des pistes d'atterrissage prévues pour des approches cat I.

Le document US 7 546 183 B1 décrit un système conforme à l'art antérieur, de vérification en vol de signaux ILS reçus par un aéronef. Le document EP 2 947 534 A2 décrit un procédé de contrôle, conforme à l'art antérieur, d'un aéronef équipé d'un récepteur ILS, lors d'une approche d'une piste d'atterrissage. Le document FR 3 016 222 A1 décrit un procédé conforme à l'art antérieur, de guidage vertical d'un aéronef lors d'une approche d'une piste d'atterrissage.

EXPOSE DE L'INVENTION :

La présente invention a notamment pour but d'apporter une solution à ce problème. Elle concerne un système d'aide à l'atterrissage d'un aéronef sur une piste d'atterrissage d'un aéroport selon une approche prédéterminée de ladite piste d'atterrissage, ledit système d'aide à l'atterrissage étant remarquable en ce qu'il comprend une unité de traitement configurée pour : pendant une première phase d'une procédure d'approche de la piste d'atterrissage selon ladite approche prédéterminée, lorsque l'aéronef vole au-dessus d'une hauteur prédéterminée par rapport à un seuil de la piste d'atterrissage :

- acquérir des informations issues d'un récepteur de signaux de guidage ILS embarqué à bord de l'aéronef ;
- acquérir des informations de position et de vitesse de l'aéronef issues d'un récepteur de signaux d'un système de navigation par satellite embarqué à bord de l'aéronef ;
- acquérir des informations de position et de vitesse de l'aéronef issues d'une centrale inertielle embarquée à bord de l'aéronef ;
- déterminer des informations dites fusionnées de position et de vitesse de l'aéronef en fonction desdites informations issues du récepteur de signaux de guidage ILS et desdites informations de position et de vitesse de l'aéronef issues du récepteur de signaux d'un système de navigation par satellite ;
- déterminer un biais des informations de position et de vitesse issues de la centrale inertielle, en fonction desdites informations fusionnées de position et de vitesse ; et

  - commander le guidage de l'aéronef sur la base des informations issues du récepteur de signaux de guidage ILS,

puis
pendant une deuxième phase de la procédure d'approche de la piste d'atterrissage selon ladite approche prédéterminée, lorsque l'aéronef vole au-dessous de ladite hauteur prédéterminée par rapport au seuil de la piste d'atterrissage :

- acquérir des informations de position et de vitesse de l'aéronef issues de la centrale inertielle ;
- déterminer des informations dites recalées de position et de vitesse de l'aéronef en appliquant aux informations de position et de vitesse de l'aéronef issues de la centrale inertielle, une correction correspondant au biais déterminé pendant la première phase de la procédure d'approche ; et
- commander le guidage de l'aéronef le long d'un axe d'approche de la piste d'atterrissage correspondant à ladite approche prédéterminée, en fonction desdites informations de position et de vitesse recalées.

Ainsi, ce système permet de s'affranchir d'imprécisions du système ILS d'atterrissage aux instruments lorsque l'aéronef vole en dessous de la hauteur prédéterminée, choisie de préférence au moins égale à la hauteur de décision correspondant à l'approche prédéterminée considérée. En effet, conformément à l'invention, en dessous de la hauteur prédéterminée l'aéronef est guidé uniquement sur la base d'informations déterminées à bord de l'aéronef (informations recalées déterminées en fonction d'informations issues de la centrale inertielle). Le fait de ne pas utiliser d'informations issues d'un système extérieur à l'aéronef permet de s'affranchir d'imprécisions et de modes de pannes d'un tel système extérieur à l'aéronef (par exemple un système ILS d'atterrissage aux instruments ou un système de navigation par satellite). Les informations issues d'une centrale inertielle sont connues pour dériver avec le temps. Toutefois, sur une durée suffisamment courte, la dérive des informations issues de la centrale inertielle peut être considérée comme négligeable et ces informations présentent alors une fiabilité et une précision très élevées. Or, la durée de la deuxième phase de la procédure d'approche, lorsque l'aéronef vole au-dessous de ladite hauteur prédéterminée, est suffisamment courte pour que la dérive des informations issues de la centrale inertielle soit considérée comme négligeable pendant cette durée. De plus, le fait de déterminer le biais des informations de position et de vitesse issues de la centrale inertielle en fonction desdites informations fusionnées de position et de vitesse permet de déterminer ce biais avec une précision suffisante pour que les informations de position et de vitesse issues de la centrale inertielle et recalées en fonction de ce biais permettent un guidage suffisamment précis de l'aéronef pendant la deuxième phase de la procédure d'approche. En effet, ces informations fusionnées sont déterminées en fonction des informations issues du récepteur de signaux de guidage ILS et des informations de position et de vitesse de l'aéronef issues du récepteur de signaux d'un système de navigation par satellite. Par conséquent, en cas d'imprécision temporaire des informations issues du récepteur de signaux de guidage ILS, par exemple en cas de multi-trajets des signaux ILS, cette imprécision est corrigée grâce aux informations de position et de vitesse de l'aéronef issues du récepteur de signaux d'un système de navigation par satellite.

De façon avantageuse, l'unité de traitement est en outre configurée pour :

- acquérir des informations relatives à la piste d'atterrissage, issues d'une base de données aéroportuaire,
- déterminer une orientation de la piste d'atterrissage en fonction desdites informations relatives à la piste d'atterrissage,
- déterminer une orientation d'un axe d'approche de la piste d'atterrissage en fonction des informations de position et de vitesse de l'aéronef issues du récepteur de signaux de guidage ILS ainsi que des informations de position et de vitesse de l'aéronef issues du récepteur de signaux d'un système de navigation par satellite,
- déterminer un écart entre ladite orientation de la piste d'atterrissage et ladite orientation de l'axe d'approche ; et
- déterminer le biais des informations de position et de vitesse issues de la centrale inertielle en fonction, en outre, dudit écart.

Dans un mode particulier de réalisation, l'unité de traitement est configurée pour commander le guidage de l'aéronef, pendant la première phase, sur la base des informations issues du récepteur de signaux de guidage ILS corrigées dudit écart.

Dans un mode particulier de réalisation, l'unité de traitement est configurée pour déterminer lesdites informations fusionnées de position et de vitesse de l'aéronef au moyen d'au moins un filtre de Kalman recevant en entrée au moins lesdites informations issues du récepteur de signaux de guidage ILS et lesdites informations de position et de vitesse de l'aéronef issues du récepteur de signaux d'un système de navigation par satellite.

De façon avantageuse, l'unité de traitement est en outre configurée pour, pendant la deuxième phase de la procédure d'approche, déterminer une hauteur courante de l'aéronef par rapport au seuil de la piste d'atterrissage et pour transmettre cette hauteur courante de l'aéronef à un système de guidage de l'aéronef pour commander une manoeuvre d'arrondi en fonction de ladite hauteur courante.

De façon avantageuse encore, l'unité de traitement est en outre configurée pour, pendant la première phase de la procédure d'approche, déterminer une hauteur courante de l'aéronef par rapport au seuil de la piste d'atterrissage et pour transmettre cette hauteur courante à un système de guidage de l'aéronef pour préparer une manoeuvre d'arrondi en fonction de ladite hauteur courante.

De façon particulière, l'unité de traitement est configurée pour déterminer la hauteur courante de l'aéronef en fonction de la pente de l'axe d'approche et d'une distance entre une position courante de l'aéronef et la position du seuil de piste.

Dans un mode de réalisation, l'unité de traitement fait partie d'un calculateur avionique de l'aéronef, en particulier un calculateur de commandes de vol de l'aéronef.

L'invention est également relative à un procédé d'aide à l'atterrissage d'un aéronef sur une piste d'atterrissage d'un aéroport selon une approche prédéterminée de ladite piste d'atterrissage. Ce procédé est remarquable en ce qu'il comprend les étapes suivantes mises en oeuvre par une unité de traitement embarquée à bord de l'aéronef :

pendant une première phase d'une procédure d'approche de la piste d'atterrissage selon ladite approche prédéterminée, lorsque l'aéronef vole au-dessus d'une hauteur prédéterminée par rapport à un seuil de la piste d'atterrissage :

- acquérir des informations issues d'un récepteur de signaux de guidage ILS embarqué à bord de l'aéronef ;
- acquérir des informations de position et de vitesse de l'aéronef issues d'un récepteur de signaux d'un système de navigation par satellite embarqué à bord de l'aéronef ;
- acquérir des informations de position et de vitesse de l'aéronef issues d'une centrale inertielle embarquée à bord de l'aéronef ;
- déterminer des informations dites fusionnées de position et de vitesse de l'aéronef en fonction desdites informations issues du récepteur de signaux de guidage ILS et desdites informations de position et de vitesse de l'aéronef issues du récepteur de signaux d'un système de navigation par satellite ;
- déterminer un biais des informations de position et de vitesse issues de la centrale inertielle, en fonction desdites informations fusionnées de position et de vitesse ; et
- commander le guidage de l'aéronef sur la base des informations issues du récepteur de signaux de guidage ILS,

puis

pendant une deuxième phase de la procédure d'approche de la piste d'atterrissage selon ladite approche prédéterminée, lorsque l'aéronef vole au-dessous de ladite hauteur prédéterminée par rapport au seuil de la piste d'atterrissage :

- acquérir des informations de position et de vitesse de l'aéronef issues de la centrale inertielle ;
- déterminer des informations dites recalées de position et de vitesse de l'aéronef en appliquant aux informations de position et de vitesse de l'aéronef issues de la centrale inertielle, une correction correspondant au biais déterminé pendant la première phase de la procédure d'approche ; et

- commander le guidage de l'aéronef le long d'un axe d'approche de la piste d'atterrissage correspondant à ladite approche prédéterminée, en fonction desdites informations de position et de vitesse recalées.

L'invention est également relative à un aéronef comprenant un système d'aide à l'atterrissage tel que précité.

DESCRIPTION DETAILLEE :

L'invention sera mieux comprise à la lecture de la description qui suit et à l'examen des figures annexées.

La figure 1 est une vue d'un aéronef comprenant un système d'aide à l'atterrissage conforme à un mode de réalisation de l'invention.
La figure 2 illustre de façon schématique un système d'aide à l'atterrissage conforme à un mode de réalisation de l'invention.
La figure 3 est une vue en perspective d'une piste d'atterrissage et d'un axe d'approche de la piste d'atterrissage.
La figure 4 est une vue en coupe, selon un plan vertical, d'une piste d'atterrissage et d'un axe d'approche de la piste d'atterrissage.

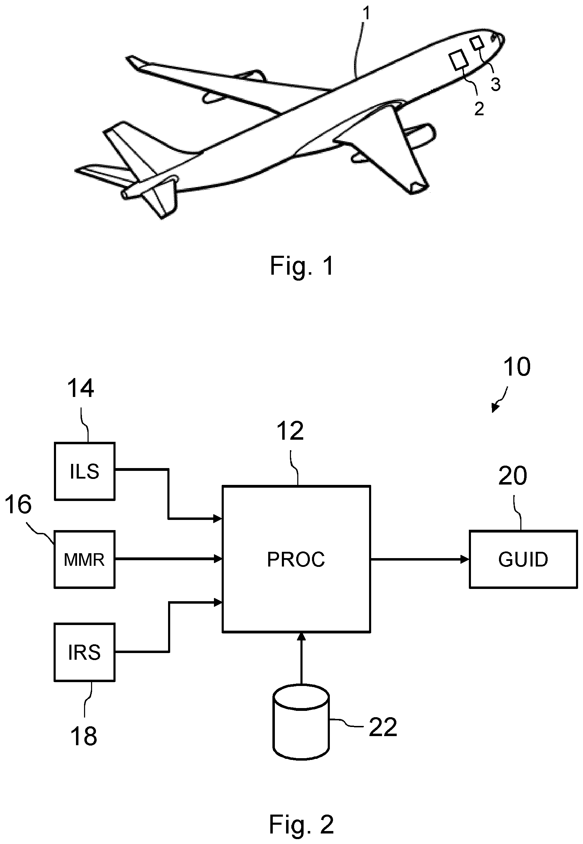

Le système 10 d'aide à l'atterrissage représenté sur la figure 2 comprend une unité de traitement 12, reliée en entrée à un récepteur 14 de signaux ILS embarqué à bord de l'aéronef, à un récepteur 16 d'un système de navigation par satellite, par exemple un récepteur multimode MMR (« Multi Mode Receiver » en anglais) embarqué à bord de l'aéronef et à une centrale inertielle 18 (libellée IRS sur la figure, pour « Inertial Référence System » en anglais) embarquée à bord de l'aéronef. L'unité de traitement 12 est également reliée à une base de données aéroportuaires 22. L'unité de traitement 12 est reliée en sortie à un calculateur de guidage 20 de l'aéronef (libellé GUID sur la figure), par exemple un calculateur de commandes de vol. L'unité de traitement 12 fait de préférence partie d'un calculateur avionique de l'aéronef. Ce calculateur avionique est par exemple intégré dans une baie avionique 2, située à proximité d'un cockpit 3 de l'aéronef 1 tel que représenté sur la figure 1. L'unité de traitement 12 comprend par exemple un microprocesseur ou un microcontrôleur. De façon avantageuse, ledit calculateur avionique correspond à un calculateur de commandes de vol de l'aéronef, tel que le calculateur 20. Toutefois, sans sortir du cadre de l'invention, ce calculateur avionique peut aussi correspondre à un autre calculateur de l'aéronef, tel par exemple qu'un calculateur avionique modulaire de type IMA (« Integrated Modular Avionics » en anglais). Le récepteur 16 d'un système de navigation par satellite est par exemple un récepteur d'un système de type GNSS (« Global Navigation Satellite System » en anglais), par exemple de type GPS (« Global Positioning System » en anglais).

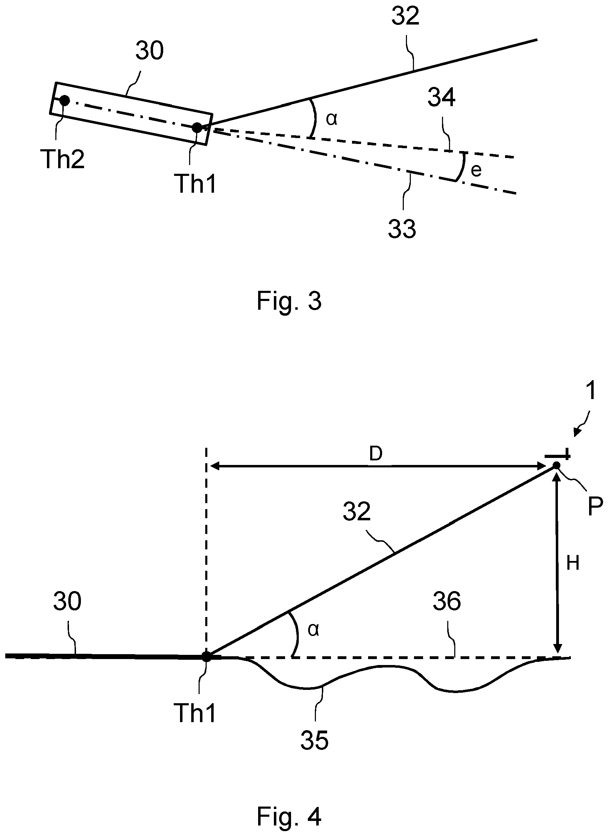

En fonctionnement, lorsqu'un pilote de l'aéronef souhaite faire atterrir l'aéronef sur une piste d'atterrissage d'un aéroport, telle que la piste d'atterrissage 30 représentée sur la figure 3, généralement il sélectionne une procédure d'approche prédéterminée de ladite piste d'atterrissage au moyen d'une interface homme-machine du cockpit de l'aéronef, reliée à un calculateur de gestion de vol de type FMS. L'unité de traitement 12 reçoit des informations sur la procédure d'approche sélectionnée par le pilote pour atterrir sur la piste d'atterrissage. Lors de l'approche de la piste d'atterrissage par l'aéronef, pendant une première phase de la procédure d'approche de la piste d'atterrissage selon l'approche prédéterminée sélectionnée par le pilote, lorsque l'aéronef vole au-dessus d'une hauteur prédéterminée par rapport à un seuil de la piste d'atterrissage, l'unité de traitement 12 :

- acquiert des informations issues du récepteur 14 de signaux de guidage ILS ;
- acquiert des informations de position et de vitesse de l'aéronef issues du récepteur 16 de signaux d'un système de navigation par satellite ;
- acquiert des informations de position et de vitesse de l'aéronef issues de la centrale inertielle 18 ;
- détermine des informations dites fusionnées de position et de vitesse de l'aéronef en fonction desdites informations issues du récepteur 14 de signaux de guidage ILS et desdites informations de position et de vitesse de l'aéronef issues du récepteur 16 de signaux d'un système de navigation par satellite ;
- détermine un biais des informations de position et de vitesse issues de la centrale inertielle 18, en fonction desdites informations fusionnées de position et de vitesse ;
- commande le guidage de l'aéronef, par le calculateur de guidage 20, sur la base des informations issues du récepteur 16 de signaux de guidage ILS.

Les signaux de guidage ILS reçus par le récepteur 14 de signaux de guidage ILS correspondent à des écarts entre une position courante de l'aéronef et l'axe d'approche 32 défini par les signaux émis par les balises du système ILS. Ces écarts correspondent à une position courante de l'aéronef. Les informations de position et de vitesse de l'aéronef issues du récepteur 16 de signaux d'un système de navigation par satellite correspondent aussi à ladite position courante de l'aéronef. L'unité de traitement 12 détermine des informations dites fusionnées de position et de vitesse de l'aéronef par exemple au moyen d'un filtre de Kalman recevant en entrée d'une part lesdits écarts correspondant aux signaux de guidage ILS ou une valeur de ladite position courante déterminée en fonction desdits écarts et, d'autre part les informations de position et de vitesse de l'aéronef issues du récepteur 16 de signaux d'un système de navigation par satellite. Le filtre de Kalman fournit en sortie lesdites informations fusionnées de position et de vitesse de l'aéronef. Ces informations fusionnées de position et de vitesse de l'aéronef présentent un niveau élevé de précision et d'intégrité. En effet, les signaux de guidage ILS permettent un guidage précis de l'aéronef en l'absence de perturbation desdits signaux. Toutefois, ceux-ci peuvent être soumis à des perturbations, telles que des multi-trajets, pouvant être dues à des réflexions des signaux émis par les balises du système ILS. Ces réflexions peuvent par exemple avoir pour origine des aéronefs se déplaçant sur l'aéroport ou volant à basse altitude à proximité de l'aéroport. Le fait de fusionner les informations correspondant aux signaux de guidage ILS avec des informations issues du récepteur 16 de signaux du système de guidage par satellite permet de produire, en sortie du filtre de Kalman, des informations fusionnées exemptes des effets d'éventuelles perturbations des signaux de guidage ILS telles que les multi-trajets précités. Cela permet de garantir le niveau élevé de précision et d'intégrité desdites informations fusionnées de position et de vitesse de l'aéronef.

L'unité de traitement 12, qui reçoit aussi les informations de position et de vitesse de l'aéronef issues de la centrale inertielle 18, détermine le biais desdites informations de position et de vitesse issues de la centrale inertielle 18, en fonction desdites informations fusionnées de position et de vitesse. Dans un premier exemple de réalisation, le biais est déterminé en calculant une différence entre les informations fusionnées de position et de vitesse de l'aéronef et les informations de position et de vitesse issues de la centrale inertielle. Dans un deuxième exemple de réalisation, le filtre de Kalman reçoit en outre en entrée les informations de position et de vitesse issues de la centrale inertielle et il fournit ledit biais en sortie, les informations fusionnées de position et de vitesse de l'aéronef correspondant alors à des variables internes du filtre de Kalman. De façon préférée, les différentes étapes d'acquisition d'informations, de détermination des informations fusionnées et de détermination du biais sont réalisées de façon itérative pendant la première phase de la procédure d'approche, par exemple selon une fréquence d'échantillonnage prédéterminée.

Pendant une deuxième phase de la procédure d'approche de la piste d'atterrissage selon ladite approche prédéterminée, lorsque l'aéronef vole au-dessous de ladite hauteur prédéterminée par rapport au seuil de la piste d'atterrissage, l'unité de traitement 12 :

- acquiert des informations de position et de vitesse de l'aéronef issues de la centrale inertielle 18 ;
- détermine des informations dites recalées de position et de vitesse de l'aéronef en appliquant aux informations de position et de vitesse de l'aéronef issues de la centrale inertielle, une correction correspondant au biais déterminé pendant la première phase de la procédure d'approche ;

- commande le guidage de l'aéronef, par le calculateur de guidage 20, le long d'un axe d'approche de la piste d'atterrissage correspondant à ladite approche prédéterminée, en fonction desdites informations de position et de vitesse recalées. Ledit axe d'approche utilisé par l'unité de traitement 12 pour commander le guidage de l'aéronef est déterminé par l'unité de traitement 12 en fonction d'informations issues de la base de données aéroportuaire 22. Cet axe d'approche a pour origine le seuil de piste Th1 dont la position est acquise par l'unité de traitement 12 auprès de la base de données aéroportuaire 22. La pente et l'orientation de l'axe d'approche sont également acquises auprès de la base de données aéroportuaire 22. L'unité de traitement 12 calcule des écarts latéraux et verticaux entre la position recalée de l'aéronef et ledit axe d'approche et elle commande le guidage de l'aéronef en fonction desdits écarts.

La valeur de la hauteur prédéterminée est par exemple au moins égale à une hauteur de décision publiée pour la procédure d'approche considérée. Par exemple, pour une procédure d'approche de type Cat I, la hauteur prédéterminée est au moins égale à 200ft (environ 60m). Ainsi, lorsque l'aéronef descend en dessous de la hauteur de décision pendant l'approche de la piste d'atterrissage, il est guidé en fonction des informations de position et de vitesse recalées. Cela permet alors d'éviter un guidage de l'aéronef en fonction d'informations provenant d'un système extérieur à l'aéronef, susceptible d'être soumis à des perturbations telles que des multi-trajets, puisque ces informations recalées sont déterminées en fonction des informations issues de la centrale inertielle 18 embarquée à bord de l'aéronef. Ainsi, même si le système de guidage équipant la piste d'atterrissage est d'une catégorie ne permettant pas un atterrissage automatique sans visibilité de la piste d'atterrissage, le système 10 conforme à l'invention permet à l'aéronef de suivre l'axe d'approche avec une précision et une intégrité suffisante pour réaliser un tel atterrissage automatique avec ou sans visibilité de la piste d'atterrissage.

De façon avantageuse, pendant la première phase de la procédure d'approche, l'unité de traitement acquiert en outre des informations relatives à la piste d'atterrissage, issues de la base de données aéroportuaire 22. De façon particulière, ces informations comprennent deux seuils de piste Th1 et Th2 correspondant à deux extrémités opposées de la piste d'atterrissage 30. L'unité de traitement détermine une orientation de la piste d'atterrissage en fonction desdites informations relatives à la piste d'atterrissage. Cette orientation correspond par exemple à l'orientation d'une droite 33 passant par lesdits deux seuils de piste Th1 et Th2. D'autre part, l'unité de traitement détermine en outre une orientation d'un axe d'approche 32 de la piste d'atterrissage en fonction des informations de position et de vitesse de l'aéronef issues du récepteur 14 de signaux de guidage ILS ainsi que des informations de position et de vitesse de l'aéronef issues du récepteur 16 de signaux d'un système de navigation par satellite. De façon avantageuse, l'orientation de l'axe d'approche est déterminée en projection 34 dans un plan horizontal. L'axe d'approche 32 forme un angle $\alpha$ par rapport à sa projection 34 dans le plan horizontal, cet angle $\alpha$ correspondant à la pente publiée pour la procédure d'approche considérée. L'axe d'approche 32 est l'axe d'approche correspondant au système de guidage ILS, défini par les signaux émis par les balises du système de guidage ILS. L'unité de traitement 12 détermine un écart e entre ladite orientation 33 de la piste d'atterrissage et ladite orientation 34 de l'axe d'approche. Bien que non obligatoirement, l'écart e est par exemple défini sous la forme d'un écart angulaire. Un tel écart peut notamment être non nul lorsque des contraintes d'implantation des balises au sol imposent d'implanter la balise émettant les signaux correspondant au signal LOC à l'écart latéralement de la piste d'atterrissage 30. L'unité de traitement 12 détermine alors le biais des informations de position et de vitesse issues de la centrale inertielle 18 en fonction, en outre, dudit écart e.

Dans un mode particulier de réalisation, l'unité de traitement 12 commande le guidage de l'aéronef, pendant la première phase, sur la base des informations issues du récepteur 14 de signaux de guidage ILS corrigées dudit écart e. Cela permet ainsi de guider l'aéronef dans l'alignement de la piste d'atterrissage 30, en s'affranchissant dudit écart e entre l'orientation 33 de la piste d'atterrissage et la projection 34 de l'axe d'approche correspondant au système de guidage ILS.

Dans un mode de réalisation, l'unité de traitement 12 détermine une hauteur courante de l'aéronef par rapport au seuil Th1 de la piste d'atterrissage. De façon avantageuse, pendant la première phase de la procédure d'approche, l'unité de traitement transmet cette hauteur courante de l'aéronef au calculateur de guidage 20, de façon à permettre au calculateur de guidage de préparer une manoeuvre d'arrondi en vue de poser les roues de l'aéronef sur la piste d'atterrissage, en fonction de ladite hauteur courante. Une telle manoeuvre d'arrondi est généralement appelée « flare » en anglais. De façon avantageuse encore, pendant la deuxième phase de la procédure d'approche, l'unité de traitement transmet cette hauteur courante de l'aéronef au calculateur de guidage de commander une manoeuvre d'arrondi en vue de poser les roues de l'aéronef sur la piste d'atterrissage, en fonction de ladite hauteur courante. Cette hauteur courante est suffisamment précise pour permettre au calculateur de guidage de préparer et de commander la manoeuvre d'arrondi, avant que l'aéronef arrive au seuil de piste. Toutefois, lorsque l'aéronef arrive au seuil de piste, le calculateur de guidage 20 utilise une information de hauteur issue d'un radioaltimètre embarqué à bord de l'aéronef. En effet, pour commander le posé des roues de l'aéronef sur la piste d'atterrissage, le calculateur de guidage 20 requiert une information de hauteur la plus précise possible. Or, lorsque l'aéronef est au-dessus de la piste d'atterrissage, l'information de hauteur issue du radioaltimètre est plus précise que ladite hauteur courante déterminée par l'unité de traitement 12.

Dans un mode particulier de réalisation, l'unité de traitement 12 détermine la hauteur courante de l'aéronef par rapport au seuil Th1 de la piste d'atterrissage en fonction de la pente α de l'axe d'approche 32 et d'une distance entre une position courante de l'aéronef et la position du seuil de piste. Pour cela, dans un exemple illustré par la figure 4, l'unité de traitement calcule une distance D entre une position courante P de l'aéronef 1 et la position du seuil de piste Th1. La distance D est de préférence calculée en projection dans un plan horizontal. La valeur de la position courante P de l'aéronef est par exemple reçue du récepteur 16 du système de navigation par satellite (en particulier pendant la première phase de la procédure d'approche), ou de la centrale inertielle 18 (en particulier pendant la deuxième phase de la procédure d'approche). La valeur de la position du seuil de piste Th1 est par exemple acquise de la base de données aéroportuaire 22. Connaissant la pente α de l'axe d'approche 32, la hauteur courante H de l'aéronef par rapport au seuil de piste Th1 (dont l'altitude est illustrée par la ligne 36 en trait discontinu) est alors calculée en utilisant la formule suivante :

$$H = D \times \text{tangente } (\alpha)$$

De façon avantageuse, pendant la première phase de la procédure d'approche, l'unité de traitement corrige cette valeur de hauteur courante en fonction d'une valeur angulaire α1 correspondant à un écart par rapport au signal Glide de guidage vertical, reçu du récepteur 14 de signaux de guidage ILS. Cela permet de tenir compte de l'erreur de position de l'aéronef par rapport à l'axe d'approche. La hauteur courante de l'aéronef est alors calculée selon la formule :

$$H = D \times \text{tangente } (\alpha + \alpha 1)$$

Selon une première variante, l'angle α de pente de l'axe d'approche est choisi arbitrairement égal à 3°. Cette valeur correspond à la pente de la majorité des approches publiées. De plus, pour les approches ayant une pente différente, l'angle correspondant est voisin de 3° à quelques dixièmes de degrés près. L'erreur angulaire est donc minime. De plus, cette erreur étant angulaire, son effet sur la valeur de la hauteur courante H diminue au fur et à mesure que l'aéronef s'approche de la piste d'atterrissage.

Selon une deuxième variante, l'unité de traitement 12 acquiert la valeur de l'angle α de la base de données aéroportuaire 22. Cette valeur correspond alors à la valeur publiée de la pente de l'axe d'approche.

Selon une troisième variante, des valeurs d'angles d'approche sont mémorisées dans l'unité de traitement 12, pour un ensemble d'approches de pistes d'atterrissage fréquemment utilisées par la compagnie aérienne exploitant l'aéronef. L'angle α est alors lu par l'unité de traitement 12 dans sa mémoire, pour l'approche considérée. Cette variante permet d'utiliser une valeur précise de l'angle α, en s'affranchissant d'éventuels problèmes d'intégrité de la base de données aéroportuaire 22.

La hauteur courante H présente l'avantage, par rapport à une hauteur courante mesurée au moyen d'un radioaltimètre embarqué à bord de l'aéronef, d'être référencée par rapport à l'altitude du seuil de piste Th1 (illustrée par la ligne 36) et pas par rapport au terrain 35 survolé par l'aéronef (comme dans le cas d'un radioaltimètre). En effet, l'utilisation d'une information de hauteur de l'aéronef par rapport au terrain, mesurée par un radioaltimètre, n'est pas optimale pour réaliser une manoeuvre d'arrondi car cette information dépend du terrain survolé par l'aéronef. Cela restreint le nombre de pistes d'atterrissage sur lesquelles la manoeuvre d'arrondi peut être contrôlée de façon automatique, en excluant des pistes d'atterrissages pour lesquelles le relief du terrain 35 en amont de la piste est irrégulier. L'utilisation de la hauteur courante H précitée pour réaliser une manoeuvre d'arrondi permet de s'affranchir du problème précité et donc de contrôler de façon automatique une manoeuvre d'arrondi quel que soit le relief en amont de la piste d'atterrissage.

D'autre part, la hauteur courante H déterminée par l'unité de traitement 12 présente également l'avantage, par rapport à une hauteur barométrique déterminée à bord de l'aéronef, d'être insensible aux conditions extérieures (température, pression, etc.). Dans un mode particulier de réalisation, la hauteur barométrique de l'aéronef est utilisée pour réaliser une surveillance de la hauteur courante H.

**Revendications**

1. Système (10) d'aide à l'atterrissage d'un aéronef (1) sur une piste d'atterrissage (30) d'un aéroport selon une approche prédéterminée de ladite piste d'atterrissage, ledit système d'aide à l'atterrissage étant **caractérisé en ce qu'**il comprend une unité de traitement (12) configurée pour :

pendant une première phase d'une procédure d'approche de la piste d'atterrissage selon ladite approche prédéterminée, lorsque l'aéronef vole au-dessus d'une hauteur prédéterminée par rapport à un seuil de la piste d'atterrissage :

- acquérir des informations issues d'un récepteur (14) de signaux de guidage ILS embarqué à bord de l'aéronef ;

- acquérir des informations de position et de vitesse de l'aéronef issues d'un récepteur (16) de signaux d'un système de navigation par satellite embarqué à bord de l'aéronef ;
- acquérir des informations de position et de vitesse de l'aéronef issues d'une centrale inertielle (18) embarquée à bord de l'aéronef ;
- déterminer des informations dites fusionnées de position et de vitesse de l'aéronef en fonction desdites informations issues du récepteur de signaux de guidage ILS et desdites informations de position et de vitesse de l'aéronef issues du récepteur de signaux d'un système de navigation par satellite ;
- déterminer un biais des informations de position et de vitesse issues de la centrale inertielle, en fonction desdites informations fusionnées de position et de vitesse ; et
- commander le guidage de l'aéronef sur la base des informations issues du récepteur de signaux de guidage ILS,

puis

pendant une deuxième phase de la procédure d'approche de la piste d'atterrissage selon ladite approche prédéterminée, lorsque l'aéronef vole au-dessous de ladite hauteur prédéterminée par rapport au seuil de la piste d'atterrissage :

- acquérir des informations de position et de vitesse de l'aéronef issues de la centrale inertielle (18) ;
- déterminer des informations dites recalées de position et de vitesse de l'aéronef en appliquant aux informations de position et de vitesse de l'aéronef issues de la centrale inertielle, une correction correspondant au biais déterminé pendant la première phase de la procédure d'approche ; et
- commander le guidage de l'aéronef le long d'un axe d'approche de la piste d'atterrissage correspondant à ladite approche prédéterminée, en fonction desdites informations de position et de vitesse recalées.

2. Système selon la revendication 1 **caractérisé en ce que** l'unité de traitement est en outre configurée pour :

- acquérir des informations relatives à la piste d'atterrissage, issues d'une base de données aéroportuaire (22),
- déterminer une orientation de la piste d'atterrissage en fonction desdites informations relatives à la piste d'atterrissage,
- déterminer une orientation d'un axe d'approche de la piste d'atterrissage en fonction des informations de position et de vitesse de l'aéronef issues du récepteur (14) de signaux de guidage ILS ainsi que des informations de position et de vitesse de l'aéronef issues du récepteur (16) de signaux d'un système de navigation par satellite,
- déterminer un écart entre ladite orientation de la piste d'atterrissage et ladite orientation de l'axe d'approche ; et
- déterminer le biais des informations de position et de vitesse issues de la centrale inertielle en fonction, en outre, dudit écart.

3. Système selon la revendication 2 **caractérisé en ce que** l'unité de traitement est configurée pour commander le guidage de l'aéronef, pendant la première phase, sur la base des informations issues du récepteur (14) de signaux de guidage ILS corrigées dudit écart.

4. Système selon l'une quelconque des revendications précédentes **caractérisé en ce que** l'unité de traitement est configurée pour déterminer lesdites informations fusionnées de position et de vitesse de l'aéronef au moyen d'au moins un filtre de Kalman recevant en entrée au moins lesdites informations issues du récepteur (14) de signaux de guidage ILS et lesdites informations de position et de vitesse de l'aéronef issues du récepteur (16) de signaux d'un système de navigation par satellite.

5. Système selon l'une quelconque des revendications précédentes **caractérisé en ce que** l'unité de traitement est en outre configurée pour, pendant la deuxième phase de la procédure d'approche, déterminer une hauteur courante (H) de l'aéronef par rapport au seuil (Th1) de la piste d'atterrissage et pour transmettre cette hauteur courante de l'aéronef à un système de guidage (20) de l'aéronef pour commander une manoeuvre d'arrondi en fonction de ladite hauteur courante.

6. Système selon l'une quelconque des revendications précédentes, **caractérisé en ce que** l'unité de traitement est en outre configurée pour, pendant la première phase de la procédure d'approche, déterminer une hauteur courante (H) de l'aéronef par rapport au seuil (Th1) de la piste d'atterrissage et pour transmettre cette hauteur courante à un système de guidage (20) de l'aéronef pour préparer une manoeuvre d'arrondi en fonction de ladite hauteur courante.

7. Système selon l'une quelconque des revendications 5 ou 6, **caractérisé en ce que** l'unité de traitement est configurée pour déterminer la hauteur courante (H) de l'aéronef en fonction de la pente ($\alpha$) de l'axe d'approche (32) et d'une distance (D) entre une position courante (P) de l'aéronef et la position du seuil de piste (Th1).

8. Système selon l'une quelconque des revendications précédentes, **caractérisé en ce que** l'unité de traitement fait partie d'un calculateur avionique de l'aéronef, en particulier un calculateur de commandes de vol (20) de l'aéronef.

9. Procédé d'aide à l'atterrissage d'un aéronef (1) sur une piste d'atterrissage (30) d'un aéroport selon une approche prédéterminée de ladite piste d'atterrissage, **caractérisé en ce qu'**il comprend les étapes suivantes mises en oeuvre par une unité de traitement (12) embarquée à bord de l'aéronef :

pendant une première phase d'une procédure d'approche de la piste d'atterrissage selon ladite approche prédéterminée, lorsque l'aéronef vole au-dessus d'une hauteur prédéterminée par rapport à un seuil de la piste d'atterrissage :

- acquérir des informations issues d'un récepteur (14) de signaux de guidage ILS embarqué à bord de l'aéronef ;
- acquérir des informations de position et de vitesse de l'aéronef issues d'un récepteur (16) de signaux d'un système de navigation par satellite embarqué à bord de l'aéronef ;
- acquérir des informations de position et de vitesse de l'aéronef issues d'une centrale inertielle (18) embarquée à bord de l'aéronef ;
- déterminer des informations dites fusionnées de position et de vitesse de l'aéronef en fonction desdites informations issues du récepteur de signaux de guidage ILS et desdites informations de position et de vitesse de l'aéronef issues du récepteur de signaux d'un système de navigation par satellite ;
- déterminer un biais des informations de position et de vitesse issues de la centrale inertielle, en fonction desdites informations fusionnées de position et de vitesse ; et
- commander le guidage de l'aéronef sur la base des informations issues du récepteur de signaux de guidage ILS,

puis

pendant une deuxième phase de la procédure d'approche de la piste d'atterrissage selon ladite approche prédéterminée, lorsque l'aéronef vole au-dessous de ladite hauteur prédéterminée par rapport au seuil de la piste d'atterrissage :

- acquérir des informations de position et de vitesse de l'aéronef issues de la centrale inertielle (18) ;

- déterminer des informations dites recalées de position et de vitesse de l'aéronef en appliquant aux informations de position et de vitesse de l'aéronef issues de la centrale inertielle, une correction correspondant au biais déterminé pendant la première phase de la procédure d'approche ; et
- commander le guidage de l'aéronef le long d'un axe d'approche de la piste d'atterrissage correspondant à ladite approche prédéterminée, en fonction desdites informations de position et de vitesse recalées.

10. - Aéronef (1), **caractérisé en ce qu'**il comprend un système (10) d'aide à l'atterrissage selon l'une quelconque des revendications 1 à 8.

**Patentansprüche**

1. Hilfssystem (10) für das Landen eines Luftfahrzeugs (1) auf einer Landebahn (30) eines Flughafens gemäß einem vorbestimmten Anflug auf die Landebahn, wobei das Landungshilfssystem **dadurch gekennzeichnet ist, dass** es eine Verarbeitungseinheit (12) beinhaltet, die für Folgendes konfiguriert ist:

während einer ersten Phase einer Prozedur zum Anflug auf die Landebahn gemäß dem vorbestimmten Anflug, wenn das Luftfahrzeug in Bezug auf eine Schwelle der Landebahn oberhalb einer vorbestimmten Höhe fliegt:

- Erfassen von Informationen, die aus einem Empfänger (14) für ILS-Führungssignale stammen, der sich an Bord des Luftfahrzeugs befindet;
- Erfassen von Positions- und Geschwindigkeitsinformationen des Luftfahrzeugs, die aus einem Empfänger (16) für Signale eines Satellitennavigationssystems stammen, der sich an Bord des Luftfahrzeugs befindet;
- Erfassen von Positions- und Geschwindigkeitsinformationen des Luftfahrzeugs, die aus einer inertialen Messeinheit (18) stammen, die sich an Bord des Luftfahrzeugs befindet;
- Bestimmen sogenannter zusammengeführter Positions- und Geschwindigkeitsinformationen des Luftfahrzeugs in Abhängig von den Informationen, die aus dem Empfänger für ILS-Führungssignale stammen, und den Positions- und Geschwindigkeitsinformationen des Luftfahrzeugs, die aus dem Empfänger für Signale eines Satellitennavigationssystems stammen;
- Bestimmen eines Bias der Positions- und Geschwindigkeitsinformationen, die aus der inertialen Messeinheit stammen, in Abhängigkeit von den zusammengeführten Positions- und Geschwindigkeitsinformationen; und

- Steuern der Führung des Luftfahrzeugs basierend auf den Informationen, die aus dem Empfänger für ILS-Führungssignale stammen,

dann

während einer zweiten Phase der Prozedur zum Anflug auf die Landebahn gemäß dem vorbestimmten Anflug, wenn das Luftfahrzeug in Bezug auf die Schwelle der Landebahn unterhalb der vorbestimmten Höhe fliegt:

    - Erfassen von Positions- und Geschwindigkeitsinformationen des Luftfahrzeugs, die aus der inertialen Messeinheit (18) stammen;

    - Bestimmen von sogenannten justierten Positions- und Geschwindigkeitsinformationen des Luftfahrzeugs, indem auf die Positions- und Geschwindigkeitsinformationen des Luftfahrzeugs, die aus der inertialen Messeinheit stammen, eine Korrektur angewendet wird, die dem während der ersten Phase der Anflugprozedur bestimmten Bias entspricht; und

    - Steuern der Führung des Luftfahrzeugs entlang einer Anflugachse der Landebahn, die dem vorbestimmten Anflug entspricht, in Abhängigkeit von den justierten Positions- und Geschwindigkeitsinformationen.

2.   System nach Anspruch 1, **dadurch gekennzeichnet, dass** die Verarbeitungseinheit ferner für Folgendes konfiguriert ist:

    - Erfassen von Informationen über die Landebahn, die aus einer Flughafendatenbank (22) stammen,

    - Bestimmen einer Ausrichtung der Landebahn in Abhängigkeit von den Informationen über die Landebahn,

    - Bestimmen einer Ausrichtung einer Anflugachse der Landebahn in Abhängigkeit von den Positions- und Geschwindigkeitsinformationen des Luftfahrzeugs, die aus dem Empfänger (14) für ILS-Führungssignale stammen, sowie den Positions- und Geschwindigkeitsinformationen des Luftfahrzeugs, die aus dem Empfänger (16) für Signale eines Satellitennavigationssystems stammen,

    - Bestimmen einer Abweichung zwischen der Ausrichtung der Landebahn und der Ausrichtung der Anflugachse; und

    - Bestimmen des Bias der Positions- und Geschwindigkeitsinformationen, die aus der inertialen Messeinheit stammen, unter anderem in Abhängigkeit von der Abweichung.

3.   System nach Anspruch 2, **dadurch gekennzeichnet, dass** die Verarbeitungseinheit dazu konfiguriert ist, die Führung des Luftfahrzeugs während der ersten Phase basierend auf den Informationen zu steuern, die aus dem Empfänger (14) für ILS-Führungssignale stammen und um die Abweichung korrigiert wurden.

4.   System nach einem beliebigen der vorhergehenden Ansprüche, **dadurch gekennzeichnet, dass** die Verarbeitungseinheit dazu konfiguriert ist, die zusammengeführten Positions- und Geschwindigkeitsinformationen des Luftfahrzeugs mittels mindestens eines Kalman-Filters zu bestimmen, der am Eingang mindestens die Informationen, die aus dem Empfänger (14) für ILS-Führungssignale stammen, und die Positions- und Geschwindigkeitsinformationen des Luftfahrzeugs, die aus dem Empfänger (16) für Signale eines Satellitennavigationssystems stammen, empfängt.

5.   System nach einem beliebigen der vorhergehenden Ansprüche, **dadurch gekennzeichnet, dass** die Verarbeitungseinheit ferner dazu konfiguriert ist, während der zweiten Phase der Anflugprozedur eine aktuelle Höhe (H) des Luftfahrzeugs in Bezug auf die Schwelle (Th1) der Landebahn zu bestimmen und diese aktuelle Höhe des Luftfahrzeugs an ein Führungssystem (20) des Luftfahrzeugs zu übertragen, um einen Abfangvorgang in Abhängigkeit von der aktuellen Höhe zu steuern.

6.   System nach einem beliebigen der vorhergehenden Ansprüche, **dadurch gekennzeichnet, dass** die Verarbeitungseinheit ferner dazu konfiguriert ist, während der ersten Phase der Anflugprozedur eine aktuelle Höhe (H) des Luftfahrzeugs in Bezug auf die Schwelle (Th1) der Landebahn zu bestimmen und diese aktuelle Höhe an ein Führungssystem (20) des Luftfahrzeugs zu übertragen, um einen Abfangvorgang in Abhängigkeit von der aktuellen Höhe vorzubereiten.

7.   System nach einem beliebigen der Ansprüche 5 oder 6, **dadurch gekennzeichnet, dass** die Verarbeitungseinheit dazu konfiguriert ist, die aktuelle Höhe (H) des Luftfahrzeugs in Abhängigkeit von der Neigung $(\alpha)$ der Anflugachse (32) und einem Abstand (D) zwischen einer aktuellen Position (P) des Luftfahrzeugs und der Position der Bahnschwelle (Th1) zu bestimmen.

8.   System nach einem beliebigen der vorhergehenden Ansprüche, **dadurch gekennzeichnet, dass** die Verarbeitungseinheit Teil eines Flugzeugrechners des Luftfahrzeugs, insbesondere eines Flugsteuerungsrechners (20) des Luftfahrzeugs, ist.

9. Hilfsverfahren für das Landen eines Luftfahrzeugs (1) auf einer Landebahn (30) eines Flughafens gemäß einem vorbestimmten Anflug auf die Landebahn, **dadurch gekennzeichnet, dass** es die folgenden Schritte beinhaltet, die durch eine Verarbeitungseinheit (12) umgesetzt werden, die sich an Bord des Luftfahrzeugs befindet:

während einer ersten Phase einer Prozedur zum Anflug auf die Landebahn gemäß dem vorbestimmten Anflug, wenn das Luftfahrzeug in Bezug auf eine Schwelle der Landebahn oberhalb einer vorbestimmten Höhe fliegt:

- Erfassen von Informationen, die aus einem Empfänger (14) für ILS-Führungssignale stammen, der sich an Bord des Luftfahrzeugs befindet;
- Erfassen von Positions- und Geschwindigkeitsinformationen des Luftfahrzeugs, die aus einem Empfänger (16) für Signale eines Satellitennavigationssystems stammen, der sich an Bord des Luftfahrzeugs befindet;
- Erfassen von Positions- und Geschwindigkeitsinformationen des Luftfahrzeugs, die aus einer inertialen Messeinheit (18) stammen, die sich an Bord des Luftfahrzeugs befindet;
- Bestimmen sogenannter zusammengeführter Positions- und Geschwindigkeitsinformationen des Luftfahrzeugs in Abhängig von den Informationen, die aus dem Empfänger für ILS-Führungssignale stammen, und den Positions- und Geschwindigkeitsinformationen des Luftfahrzeugs, die aus dem Empfänger für Signale eines Satellitennavigationssystems stammen;
- Bestimmen eines Bias der Positions- und Geschwindigkeitsinformationen, die aus der inertialen Messeinheit stammen, in Abhängigkeit von den zusammengeführten Positions- und Geschwindigkeitsinformationen; und
- Steuern der Führung des Luftfahrzeugs basierend auf den Informationen, die aus dem Empfänger für ILS-Führungssignale stammen,

dann
während einer zweiten Phase der Prozedur zum Anflug auf die Landebahn gemäß dem vorbestimmten Anflug, wenn das Luftfahrzeug in Bezug auf die Schwelle der Landebahn unterhalb der vorbestimmten Höhe fliegt:

- Erfassen von Positions- und Geschwindigkeitsinformationen des Luftfahrzeugs, die aus der inertialen Messeinheit (18) stammen;
- Bestimmen von sogenannten justierten Positions- und Geschwindigkeitsinformationen des Luftfahrzeugs, indem auf die Positions- und Geschwindigkeitsinformationen des Luftfahrzeugs, die aus der inertialen Messeinheit stammen, eine Korrektur angewendet wird, die dem während der ersten Phase der Anflugprozedur bestimmten Bias entspricht; und
- Steuern der Führung des Luftfahrzeugs entlang einer Anflugachse der Landebahn, die dem vorbestimmten Anflug entspricht, in Abhängigkeit von den justierten Positions- und Geschwindigkeitsinformationen.

10. - Luftfahrzeug (1), **dadurch gekennzeichnet, dass** es ein Landungshilfssystem (10) nach einem beliebigen der Ansprüche 1 bis 8 beinhaltet.

**Claims**

1. System (10) for assisting in the landing of an aircraft (1) on a landing runway (30) of an airport according to a predetermined approach of said landing runway, said landing assistance system being **characterized in that** it comprises a processing unit (12) configured to:

during a first phase of a landing runway approach procedure according to said predetermined approach, when the aircraft flies above a predetermined height with respect to a landing runway threshold:

- acquire information from a receiver (14) of ILS guidance signals embedded onboard the aircraft;
- acquire aircraft position and speed information from a signal receiver (16) of a satellite navigation system embedded onboard the aircraft;
- acquire aircraft position and speed information from an inertial unit (18) embedded onboard the aircraft;
- determine so-called merged aircraft position and speed information as a function of said information from the receiver of ILS guidance signals and said aircraft position and speed information from the signal receiver of a satellite navigation system;

- determine a bias of the position and speed information from the inertial unit as a function of said merged position and speed information; and
- control the guiding of the aircraft on the basis of the information from the receiver of ILS guidance signals,

then

during a second phase of the landing runway approach procedure according to said predetermined approach, when the aircraft flies below said predetermined height with respect to the landing runway threshold:

- acquire aircraft position and speed information from the inertial unit (18);
- determine so-called adjusted aircraft position and speed information by applying, to the aircraft position and speed information from the inertial unit, a correction corresponding to the bias determined during the first phase of the approach procedure; and
- control the guiding of the aircraft along a landing runway approach axis corresponding to said predetermined approach, as a function of said adjusted position and speed information.

2. System according to Claim 1, **characterized in that** the processing unit is also configured to:

- acquire information relating to the landing runway, from an airport database (22),
- determine an orientation of the landing runway as a function of said information relating to the landing runway,
- determine an orientation of a landing runway approach axis as a function of the aircraft position and speed information from the receiver (14) of ILS guidance signals and from the aircraft position and speed information from the signal receiver (16) of a satellite navigation system,
- determine a deviation between said orientation of the landing runway and said orientation of the approach axis; and
- determine the bias of the position and speed information from the inertial unit as a function, also, of said deviation.

3. System according to Claim 2, **characterized in that** the processing unit is configured to control the guiding of the aircraft, during the first phase, on the basis of the information from the receiver (14) of ILS guidance signals corrected of said deviation.

4. System according to any one of the preceding claims, **characterized in that** the processing unit is configured to determine said merged aircraft position and speed information by means of at least one Kalman filter receiving as input at least said information from the receiver (14) of ILS guidance signals and said aircraft position and speed information from the signal receiver (16) of a satellite navigation system.

5. System according to any one of the preceding claims, **characterized in that** the processing unit is also configured to, during the second phase of the approach procedure, determine a current height (H) of the aircraft with respect to the threshold (Th1) of the landing runway and to transmit this current height of the aircraft to a guidance system (20) of the aircraft to control a flare manoeuvre as a function of said current height.

6. System according to any one of the preceding claims, **characterized in that** the processing unit is also configured to, during the first phase of the approach procedure, determine a current height (H) of the aircraft with respect to the threshold (Th1) of the landing runway and to transmit this current height to a guidance system (20) of the aircraft to prepare a flare manoeuvre as a function of said current height.

7. System according to either one of Claims 5 and 6, **characterized in that** the processing unit is configured to determine the current height (H) of the aircraft as a function of the slope ($\alpha$) of the approach axis (32) and of a distance (D) between a current position (P) of the aircraft and the position of the runway threshold (Th1).

8. System according to any one of the preceding claims, **characterized in that** the processing unit forms part of an avionics computer of the aircraft, in particular a flight controls computer (20) of the aircraft.

9. Method for assisting in the landing of an aircraft (1) on a landing runway (30) of an airport according to a predetermined approach of said landing runway, **characterized in that** it comprises the following steps implemented by a processing unit (12) embedded onboard the aircraft:

during a first phase of a landing runway approach procedure according to said predetermined approach, when the aircraft flies above a predetermined height with respect to a landing runway threshold:

- acquire information from a receiver (14) of ILS guidance signals embedded onboard the aircraft;
- acquire aircraft position and speed information from a signal receiver (16) of a satellite navigation system embedded onboard the aircraft;

- acquire aircraft position and speed information from an inertial unit (18) embedded onboard the aircraft;
- determine so-called merged aircraft position and speed information as a function of said information from the receiver of ILS guidance signals and of said aircraft position and speed information from the signal receiver of a satellite navigation system;
- determine a bias of the position and speed information from the inertial unit, as a function of said merged position and speed information; and
- control the guiding of the aircraft on the basis of the information from the receiver of ILS guidance signals,

then

during a second phase of the landing runway approach procedure according to said predetermined approach, when the aircraft flies below said predetermined height with respect to the landing runway threshold:

- acquire aircraft position and speed information from the inertial unit (18);
- determine so-called adjusted aircraft position and speed information by applying, to the aircraft position and speed information from the inertial unit, a correction corresponding to the bias determined during the first phase of the approach procedure; and
- control the guiding of the aircraft along a landing runway approach axis corresponding to said predetermined approach, as a function of said adjusted position and speed information.

10. Aircraft (1), **characterized in that** it comprises a landing assistance system (10) according to any one of Claims 1 to 8.

Fig. 1

Fig. 2

32

30

α

34

e

33

**Fig. 3**

Th2

Th1

1

D

P

32

H

36

30

α

35

Th1

**Fig. 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7546183 B1
- EP 2947534 A2
- FR 3016222 A1